# EUROPEAN PATENT APPLICATION

(11) **EP 2 374 702 A2**
(43) Date of publication of application: **12.10.2011**
(21) Application number: 10192175.7
(22) Date of filing: 23.11.2010
(51) Int. Cl.: B62M 3/08

(54) **Interchangeable bicycle pedal system**

(30) Priority: 12.04.2010 US 323023 P; 18.06.2010 US 818492
(71) Applicant: Kawai, Shuji, Karumi-ku, Kobe Hyogo (JP)
(72) Inventor: Kawai, Shuji, Karumi-ku, Kobe Hyogo (JP)
(74) Representative: Kensett, John Hinton

(57) **Abstract**

A bicycle pedal assembly includes a channel-free pedal body (20) having cross members (28) which define holes for receiving an axle rod (35). The holes are axially aligned and formed with a shape which conforms to a profile of the axle rod (35) to rotationally fix the pedal body (20) to the rod (35). A first hollow bolt includes an externally threaded portion (56) to mate with a left crank arm. A second hollow bolt includes a reversed externally threaded portion to mate with a right crank arm. Each of a pair of identical axles may be joined to either the first or second hollow bolt. Each pedal assembly is interchangeable between the left and right crank arms.

## Description

### Background of the invention

### Field of the Invention

The present invention relates generally to bicycles, and more specifically to bicycle pedals.

### Description of Prior Art and Related Information

Bicycles in the prior art typically come with a preassembled pedal assembly. Each conventional pedal assembly includes a left axle with a particular threaded configuration that mates with a left crank arm, and a right axle with an opposite threaded configuration that mates with the right crank arm. Since the internal threading on each crank arm is configured to prevent precession, the external threads on conventional left and right axles are oppositely configured. Accordingly, conventional axles are not interchangeable in the sense that a conventional left axle cannot be mated with a conventional right crank arm due to incompatible threading.

### Summary of the invention

The present invention provides structures and methods which overcome the deficiencies in the prior art.

In one aspect, a bicycle pedal system is provided. The pedal system comprises a pair of axles, each axle comprising a rod having a profile that facilitates rotational fixation to a pedal body, e.g., polygonal or key-shaped. A first pair of pedal bodies is configured to be removably coupled to the pair of axles, each of the first pair of pedal bodies comprising a cross member defining a hole configured to receive a corresponding rod. A second pair of pedal bodies is configured to be removably coupled to the pair of axles, each of the second pair of pedal bodies comprising a cross member defining a hole configured to receive a corresponding rod. The polygonal profile may preferably comprise a hex shape.

Each of the first pair of pedal bodies preferably comprises a first pedal body shape. Each of the second pair of pedal bodies preferably comprises a second pedal body shape different from the first pedal body shape. Each rod may comprise at least one flat surface and/or a key shape.

The first pair of pedal bodies and the second pair of pedal bodies preferably do not house any bearings. Both axles are preferably identical. The system further comprises a pair of bolts configured to receive the pair of axles. The cross member of each of the first pair of pedal bodies comprises a thickness in the range of 1 mm to 10 mm. The cross member of each of the second pair of pedal bodies comprises in the range of 1 mm to 10 mm.

In another aspect, a bicycle pedal system comprises a first axle comprising a first rod having a profile that facilitate rotational fixation and a first externally threaded medial section. The system comprises a second axle identical to the first axle. The second axle comprises a second rod having the profile a second externally threaded medial section identical to the first externally threaded medial section.

The system may further comprise a first pedal body having a first body shape and defining a first hole having a shape configured to removably receive either of the first axle or the second axle.

The system may further comprise a second pedal body having the first body shape and defining a second hole having the shape configured to removably receive either of the first axle or the second axle.

The first pedal body may comprise a first cross member defining the first hole. The second pedal body may comprise a second cross member defining the second hole. The first pedal body and the second pedal body preferably do not house any bearings.

The system may comprise a third pedal body having a second body shape different from the first body shape. The third pedal body defines a third hole having the shape configured to removably receive either of the first axle or the second axle. The system may further comprise a fourth pedal body having the second body shape and defining a fourth hole having the shape configured to removably receive either of the first axle or the second axle. The third pedal body may comprise a third cross member defining the third hole. The fourth pedal body may comprise a fourth cross member defining the fourth hole. The first rod and the second rod may comprise the same polygonal profile.

In a further aspect, a channel-free bicycle pedal body is provided. The bicycle pedal body comprises a first sidewall, a second sidewall, and a cross member coupled to the first sidewall and the second sidewall. The cross member defines a central hole having a shape configured to receive a similarly shaped axle.

The cross member may comprise a first cross member and the central hole may comprise a first central hole. The bicycle pedal body may further comprise additional cross members and corresponding aligned holes, such as a second cross member defining a second central hole having the shape and aligned with the first central hole in order to receive the similarly shaped axle.

The bicycle pedal body may further comprise a gap between the first cross member and the second cross member. The bicycle pedal body may further comprise an axial member substantially perpendicular to the cross member. The bicycle pedal body preferably does not house any bearings.

### Brief description of the drawings

Figure 1 is a perspective view of a first preferred embodiment of a bicycle pedal assembly;
Figure 2 is a cross-sectional view of the first preferred embodiment of a bicycle pedal assembly;
Figure 3 is a perspective view of a second preferred embodiment of a bicycle pedal assembly;
Figure 4 is a cross-sectional view of the second preferred embodiment of a bicycle pedal assembly;
Figure 5 is a top plan view of a third preferred embodiment of a bicycle pedal assembly;
Figure 6 is a cross-sectional view of the third preferred embodiment of the bicycle pedal assembly;
Figure 7 is an rear view of a pair of preferred bolts;
Figure 8 is a diagram of a kit of interchangeable pedal bodies for an axle; and
Figure 9 is a diagram of a preferred method of manufacturing and assembling pedal bodies.

### Detailed description of the preferred embodiments

The invention and its various embodiments can now be better understood by turning to the following detailed description wherein illustrated embodiments are described. It is to be expressly understood that the illustrated embodiments are set forth as examples and not by way of limitations on the invention as ultimately defined in the claims.

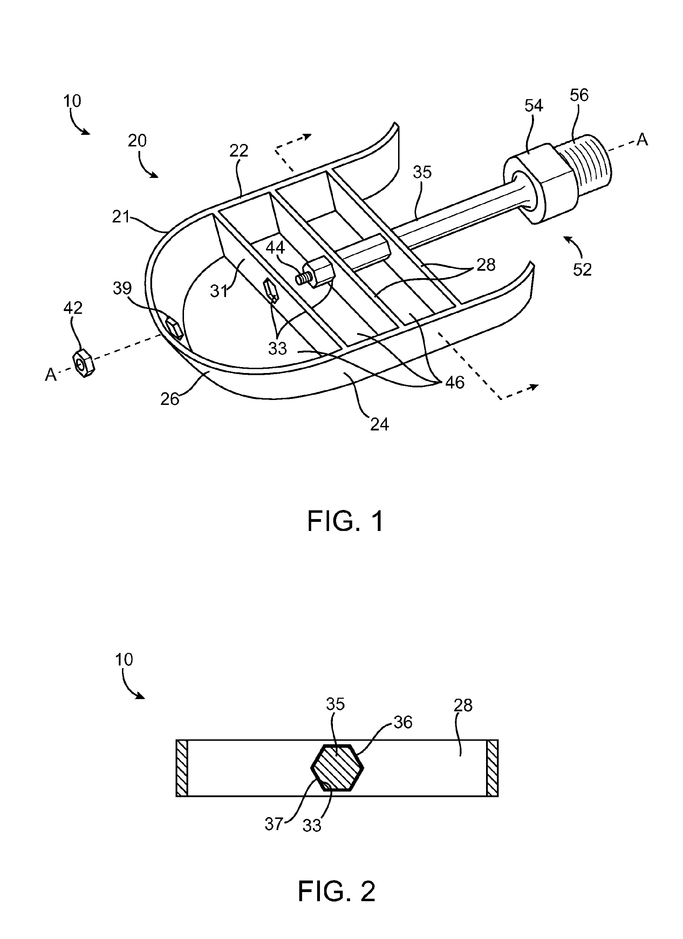

Figure 1 illustrates a first preferred embodiment of a bicycle pedal assembly 10. In Figure 1, the assembly 10 includes a pedal body 20 that is "bearing-less" or "bearing-free," which means the pedal body 20 does not house any bearings or other annular rotators, i.e., annular mechanisms which facilitate rotation. Accordingly, any bearings or annular rotators included in the pedal assembly 10 are disposed outside the pedal body 20. The pedal assembly 10 defines an axis "A" as shown in Figure 1.

In the preferred embodiment, the pedal body 20 includes a generally "vertical" perimeter wall 21, or cage, which comprises a first sidewall 22, a second opposite sidewall 24 and a curved lateral wall 26 joined to the first and second sidewalls 22, 24. As used throughout this specification, terms such as "vertical" or "horizontal" refer to the orientation and/or direction of structures where the system 10 is in the illustrated position, i.e., the general position for engaging a user's feet. It is to be expressly understood that the pedal body 20 is rotatable about the axis A and, therefore,

A plurality of cross members, or bridges, 28 extend between the first sidewall 22 and the second sidewall 24, namely, in a direction that is not parallel to the axis A, e.g., substantially perpendicularly to the axis A. Each cross member 28 preferably comprises a slat or plate 31 oriented "vertically" with respect to the axis A. Each cross member 28 defines a hole 33 with a shape conforming to the corresponding profile, or cross-sectional, shape of an axle rod 35 so as to be rotationally fixed with respect to an axle. Each cross member 28 preferably has a thickness in the range of 1 mm to 10 mm.

In the preferred embodiment, the axle rod 35 comprises a profile 36, or cross-section, that facilitates the axle 52 being rotationally fixed to the pedal body 20. For example, the axle rod 35 may comprise at least one flat surface, or have a number of flat axial surfaces 37 such as with a polygonal profile, as shown more clearly in the cross-sectional view of Figure 2 in order to facilitate rotational fixation. For example, the axle rod 35 comprises a hex-shaped polygonal profile 36. Accordingly, each hole 33 in the cross-members 28 are similarly hex-shaped and aligned to receive the hex-shaped axle rod 35 and thus rotationally fix the cross member 28 to the axle rod 35.

A similarly hex-shaped hole 39 is formed in the lateral wall 26 to enable the axle rod 35 to be inserted through. A fastener 42, such as a nut, may then be coupled to a distal tip 44 of the axle rod which may externally threaded.

In an alternative embodiment, the axle rod 35 need not extend through the lateral wall 26. Instead, the axle rod 35 can extend to a point between the lateral wall 26 and the lateral-most bridge 31. In such a case, the hole 39 in the lateral wall 26 need not be hex-shaped, but simply large enough to enable a fastener 42 and/or a fastening tool to traverse the lateral wall hole 39 so that the user can mate the fastener 42onto the axle rod 35.

By providing the pedal body 20 with holed cross members 28 separated by gaps 46, it will be appreciated that lesser material is necessary to form the body 20. Accordingly, the preferred pedal body 20 will be lighter and cheaper to manufacture than conventional pedal bodies. It will further be appreciated that the holed cross members 28 obviate the need for a channel as found in conventional pedal bodies. Accordingly, the preferred pedal bodies 20 are channel-free, which help facilitate interchangeability as a user can easily remove one preferred pedal body and substitute another preferred pedal body.

In Figures 1 and 2, an axle, or spindle, 52 comprises the axle rod 35, a nut portion 54 and a medial externally threaded portion 56. While the distal tip 44 and medial portion 56 are shown as externally threaded in the preferred embodiments, it is to be expressly understood that the distal and medial portions may be configured in a variety of different ways to facilitate connection. For example, each of the distal and medial portions may be hollow and internally threaded to receive a screw or other such fastener.

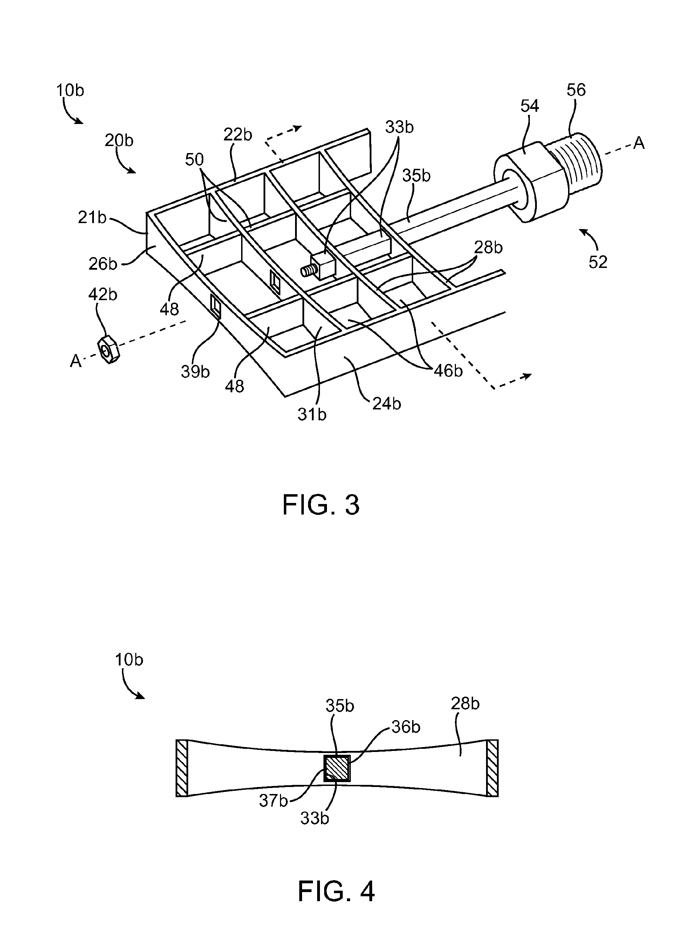

In Figure 3, a second preferred embodiment of a pedal system 10b comprises a second preferred pedal body 20b. In Figure 3, elements of similar structure are designated by the same reference numerals followed by the lower case "b." The pedal body 20b includes a perimeter wall 21 b which comprises a first sidewall 22b, a second opposite sidewall 24b and a flat lateral wall 26b joined perpendicularly to the first and second sidewalls 22b, 24b. A plurality of cross members, or bridges, 28b extend between the first sidewall 22b and the second sidewall 24b, namely, substantially perpendicularly to the axis A. Each cross member 28b preferably comprises a slat or plate 31 b oriented "vertically" with respect to the axis A. Each cross member 28b defines a hole 33b with a shape conforming to the corresponding profile, or cross-sectional, shape of an axle rod 35b so as to be rotationally fixed with respect to the axle rod 35b.

In the second preferred embodiment, the axle rod 35b comprises a polygonal profile 36b, or cross-section, having a number of flat axial surfaces 37b. For example, the axle rod 35b comprises a square-shaped polygonal profile 36b, as shown more clearly in the cross-sectional view of Figure 4. Accordingly, each hole 33b in the cross-members 28b are similarly square-shaped and aligned to receive the hex-shaped axle rod 35b and thus rotationally fix the cross member 28b to the axle rod 35b.

A similarly hex-shaped hole 39b is formed in the lateral wall 26b to enable the axle rod 35b to be inserted through. A fastener 42b, such as a nut, may then be coupled to a distal tip 44 of the axle rod which may externally threaded.

Again, the axle rod 35b in an alternative embodiment need not extend through the lateral wall 26b, but can instead can extend to a point between the lateral wall 26b and the lateral-most bridge 31 b. In such a case, the hole 39b in the lateral wall 26b need not be hex-shaped, but simply large enough to enable a fastener 42b and/or a fastening tool to traverse the lateral wall hole 39b so that the user can mate the fastener 42b onto the axle rod 35.

In the second preferred embodiment, the pedal body 20b may comprise axial members, or axial slats, 48 which are disposed generally parallel to the axle rod 35b or axis A. Thus, the pedal body 20b comprises a grid 50 with gaps 46b formed as a result of the cross members 28b and axial members 42.

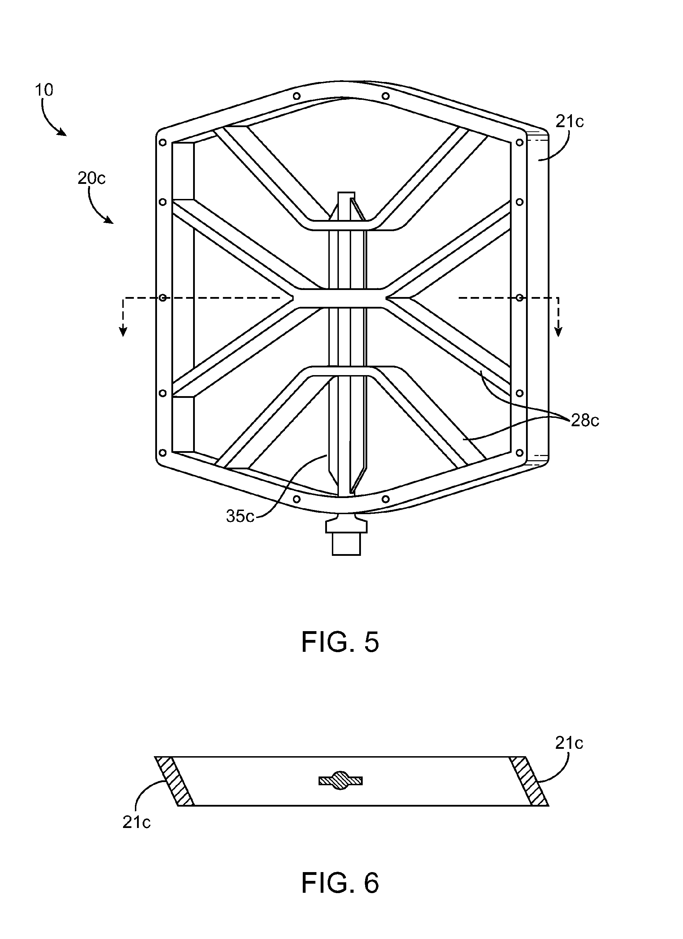

In Figure 5, a third preferred embodiment of a pedal system 10c comprises a third preferred pedal body 20c. In Figure 5, elements of similar structure are designated by the same reference numerals followed by the lower case "c." The pedal body 20c includes a perimeter wall, or cage, 21 c which is slanted vertically as best shown in Figure 6. In particular, a first sidewall 22c is slanted and a second opposite sidewall 24c is substantially parallel and thus slanted in the same direction.

In Figure 5, the cross members, or bridges, 28c extend in a variety of different directions and in patterns that are non-parallel to the axis A. Each cross member 28c defines a hole 33c with a shape conforming to the corresponding profile, or cross-sectional, shape of an axle rod 35c so as to be rotationally fixed with respect to the axle rod 35b.

In the third preferred embodiment, the axle rod 35b comprises a profile 36c, or cross-section, having a circular center and a pair of opposite axial flanges or tabs. Thus, the axle rod 35c in the third preferred comprises a key that is inserted through conforming key-shaped holes 33c in the bridges 28c.

In this embodiment, the axle rod 35c does not extend through the lateral wall 26c, but instead terminates at a point between the lateral wall 26c and the lateral-most bridge 31 c. In such a case, the hole in the lateral wall 26c need not be key-shaped, but simply large enough to accommodate a fastener 42c and/or a fastening tool to traverse the lateral wall hole so that the user can mate the fastener 42c onto the axle rod 35c.

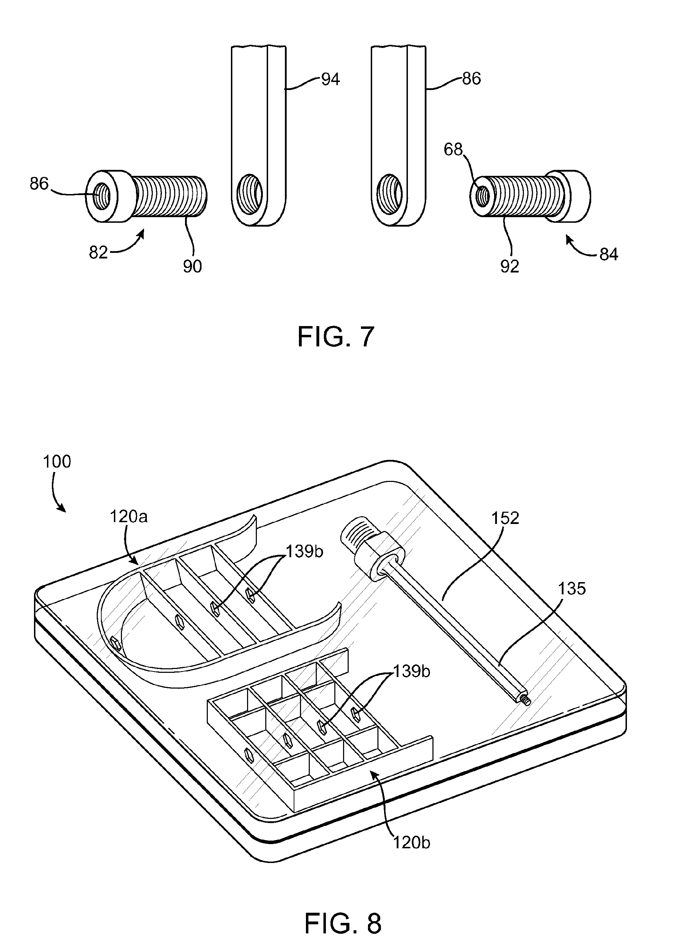

Figure 7 illustrates a pair of preferred bolts, specifically a left bolt 82 and a right bolt 84, for receiving the preferred axles and coupling each pedal assembly to a respective bicycle crank arm. Both bolts 82, 84 comprise identical internally threaded portions 86, 88, respectively, for receiving identical axles. However, the bolts 82, 84 comprise oppositely configured externally threaded portions 90, 92, namely, a left externally threaded portion 90 for mating with a left crank arm 94 and a right externally threaded portion 92 for mating with a right crank arm 96. By providing a pair of bolts 62, 64 with oppositely configured externally threaded portions 90, 92, respectively, it will be appreciated that the need for forming oppositely configured external threading on conventional axles has been obviated. Instead, left and right axles are preferably identical and may be interchangeable in connecting with the left bolt 82 and right bolt 84.

Figure 8 illustrates a kit, or system, 100 of interchangeable pedal bodies 120a, 120b of differing shapes which can be assembled on the same axle 152. The commonality between the pedal bodies 120a, 120b is the similar shape of the holes 139a, 139b defined in the bridges 128a, 128b, which conform to the polygonal profile of the axle rod 135. Accordingly, the pedal system 100 is interchangeable in that one pedal body may be removed and replaced with another of differing body shape so long as the aligned holes 139a, 139b match the cross-sectional shape of the axel rod 135. The interchangeable system may also comprise multiple axles 152, each having the same axle rod with identical profiles, e.g., polygonal, key, at least one flat surface, etc., such that a pedal body 139a, 139b which fits a first axle would fit a second axle having a similar axle rod.

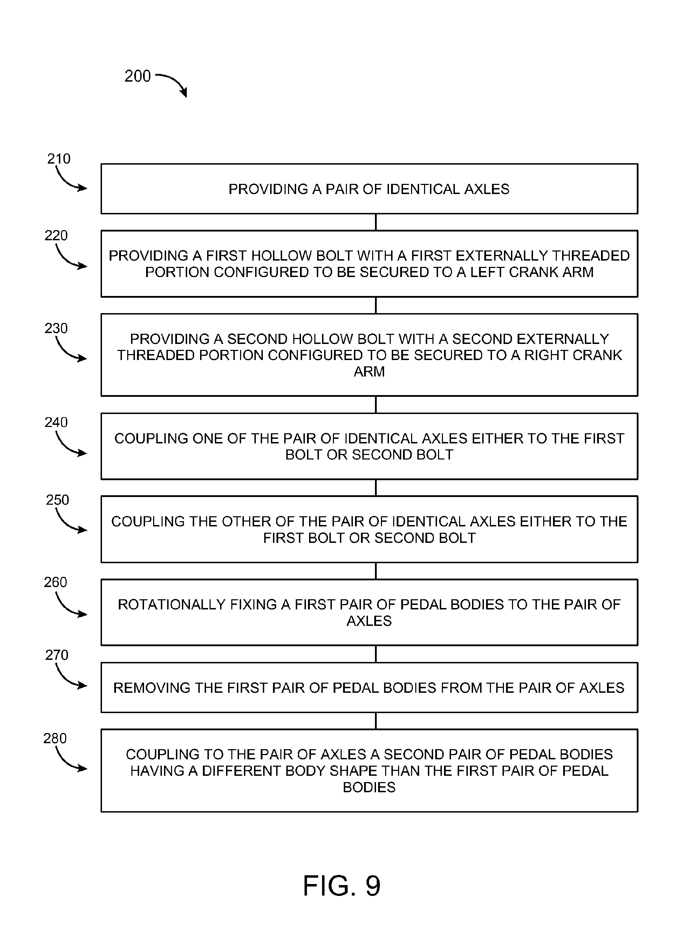

Figure 9 illustrates a preferred method 200 of manufacturing and assembling interchangeable pedal assemblies. The pedal assemblies are interchangeable in the sense that a left pedal assembly may be interchangeable with a right pedal assembly. The system is also interchangeable in the sense that a pair of preferred pedal assemblies may be removed and replaced with a new pair of preferred pedal assemblies, as well as a single preferred pedal assembly may be replaced with a new preferred pedal assembly without regard for whether the right or left crank arm is involved.

The method 200 comprises the step 210 of providing a pair of identical axles. Unlike prior axles which have to be particularly threaded for mating with a right or left crank arm, axles according to the preferred embodiments may be formed identically to be used with either crank arm.

Step 220 comprises providing a first hollow bolt with a first externally threaded portion configured to mate with an internally threaded portion of a left crank arm. Step 230 comprises a providing a second hollow bolt with a second externally threaded portion, reversed or opposite to the threading of the first hollow bolt, configured to mate with an internally threaded portion of a right crank arm.

In step 240, one of the pair of identical axles is coupled to or inserted through either one of first bolt or second bolt. In step 250, the other of the pair of identical axles is coupled to or inserted through the remaining first or second bolt.

Step 260 comprises coupling, or more specifically, rotationally fixing, a first pair of pedal bodies to the pair of axles. In step 260, an axel rod with preferably a polygonal profile is inserted through a channel-free pedal body having one or more cross members defining holes with a similarly shaped polygonal profile so as to rotationally fix the pedal body to the axle.

By omitting channels as found in conventional pedal bodies, it will be appreciated that the method 200 also provides for interchangeability or retrofitting. In particular, a new pedal body with a different pedal shape may be substituted for a current preferred body so long as the holes in the cross members match the polygonal profile of the axel rod. Accordingly, step 270 comprises removing the first pair of pedal bodies from the pair of axles. Step 280 comprises coupling to the pair of axles a second pair of pedal bodies having a different body shape than the first pair of pedal bodies. While the body shapes between the pairs of pedal bodies may differ, the shape of cross member holes remain the same in order to receive the axle rod and rotationally fix the bodies to the axles.

Many alterations and modifications may be made by those having ordinary skill in the art without departing from the spirit and scope of the invention. Therefore, it must be understood that the illustrated embodiments have been set forth only for the purposes of examples and that they should not be taken as limiting the invention as defined by the following claims. For example, notwithstanding the fact that the elements of a claim are set forth below in a certain combination, it must be expressly understood that the invention includes other combinations of fewer, more or different elements, which are disclosed in above even when not initially claimed in such combinations.

The words used in this specification to describe the invention and its various embodiments are to be understood not only in the sense of their commonly defined meanings, but to include by special definition in this specification the generic structure, material or acts of which they represent a single species.

The definitions of the words or elements of the following claims are, therefore, defined in this specification to not only include the combination of elements which are literally set forth. In this sense it is therefore contemplated that an equivalent substitution of two or more elements may be made for any one of the elements in the claims below or that a single element may be substituted for two or more elements in a claim. Although elements may be described above as acting in certain combinations and even initially claimed as such, it is to be expressly understood that one or more elements from a claimed combination can in some cases be excised from the combination and that the claimed combination may be directed to a subcombination or variation of a subcombination.

Insubstantial changes from the claimed subject matter as viewed by a person with ordinary skill in the art, now known or later devised, are expressly contemplated as being equivalently within the scope of the claims. Therefore, obvious substitutions now or later known to one with ordinary skill in the art are defined to be within the scope of the defined elements.

The claims are thus to be understood to include what is specifically illustrated and described above, what is conceptionally equivalent, what can be obviously substituted and also what incorporates the essential idea of the invention.

## Claims

1. A bicycle pedal system, comprising:
an axle comprising a rod having a profile which facilitates rotational fixation;
a first pedal body configured to be removably coupled to the axle, the first pedal body comprising a first cross member defining a first hole configured to receive the rod; and
a second pedal body configured to be removably coupled to the axle, the second pedal body comprising a second cross member defining a second hole configured to receive the rod.

2. The system of Claim 1, wherein the profile comprises a polygonal shape.

3. The system of Claim 1 or 2, wherein:
the first pedal body comprises a first pedal body shape; and
the second pedal body comprises a second pedal body shape different from the first pedal body shape.

4. The system of any preceding claim, wherein the rod comprises at least one flat surface.

5. The system of any preceding claim, wherein the first pedal body and the second pedal body do not house any bearings.

6. The system of any preceding claim, wherein the axle comprises a key.

7. The system of any preceding claim, further comprising a bolt configured to receive the axle.

8. The system of any preceding claim, wherein the axle comprises a first axle, the system further comprising:
second axle identical to the first axle, the second axle comprising a second rod having the profile.

9. The system of any preceding claim, wherein the first pedal body and the second pedal body do not house any bearings.

10. The system of any preceding claim, further comprising:
a third pedal body having a second body shape different from the first body shape, the third pedal body defining a third hole having the shape configured to removably receive either of the first axle or the second axle; and
a fourth pedal body having the second body shape and defining a fourth hole having the shape configured to removably receive either of the first axle or the second axle.

11. The system of any preceding claim, wherein:
the third pedal body comprises a third cross member defining the third hole; and
the fourth pedal body comprises a fourth cross member defining the fourth hole.

12. The system of any preceding claim, wherein the rod comprises a first rod having a polygonal profile and the second rod comprises the polygonal profile.

13. The system of any preceding claim, wherein:
the first axle comprises a first externally threaded medial section; and
the second axle comprises a second threaded medial section identical to the first externally threaded medial section.

14. The system of any preceding claim, wherein, the rod comprises a first and second rod;
the first rod comprises a key; and
the second rod comprises the key.
